(19) Europäisches Patentamt
European Patent Office
Office européen des brevets

(11) **EP 1 783 462 A1**

(12) **EUROPÄISCHE PATENTANMELDUNG**

(43) Veröffentlichungstag:
**09.05.2007 Patentblatt 2007/19**

(51) Int Cl.:
***G01D 5/249*** *(2006.01)*

(21) Anmeldenummer: 05024288.2

(22) Anmeldetag: **08.11.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Carl Freudenberg KG**
**69469 Weinheim (DE)**

(72) Erfinder: **Feurer, Georg**
**69493 Hirschberg (DE)**

Bemerkungen:
Geänderte Patentansprüche gemäss Regel 86 (2) EPÜ.

(54) **Winkelmesseinrichtung**

(57) Winkelmesseinrichtung (1), umfassend zumindest einen Messwertgeber (2), jeweils eine Anzahl von zwei unterschiedlichen signalgebenden Elementen (3, 4), die voneinander abweichende Encodersignale (16,17) erzeugen, welche durch zumindest einen Sensor (7) detektierbar sind, wobei den signalgebenden Elementen (3, 4) Signale (8, 9) zugeordnet sind, die in Form einer PRBS angeordnet sind.

Fig. 1

**Beschreibung**

Technisches Gebiet

Die Erfindung betrifft eine Winkelmesseinrichtung, umfassend zumindest einen Messwertgeber, jeweils eine Anzahl von zwei unterschiedlichen signalgebenden Elementen, die voneinander abweichende Encodersignale erzeugen, welche durch zumindest einen Sensor detektierbar sind, eine Anordnung zur Bestimmung der Winkellage sowie ein Verfahren zur Winkelmessung.

Stand der Technik

Derartige Winkelmesseinrichtungen sind allgemein bekannt und finden ihren Einsatz beispielsweise bei der Winkelmessung an Kurbelwellen von Kraftmaschinen. Die signalgebenden Elemente können dabei durch eine Verzahnung oder durch magnetisiertes Material gebildet sein. Bei dem Zahnrad ergibt sich das Signalmuster durch abwechselnd angeordnete Zähne und Täler und bei dem magnetisierten Material ergibt sich das Signalmuster durch alternierend angeordnete Nord- und Südpole. Eine unregelmäßige Stelle erlaubt eine Bestimmung der Winkellage einer Welle durch die Winkelmesseinrichtung. Zur Bestimmung der Winkellage wird das Signalmuster durch einen Sensor erfasst und in der Auswerteeinheit ausgewertet. Durch Vergleich der Signale kann zwischen regelmäßigen und unregelmäßigen Elementen unterschieden werden.

Dabei ist nachteilig, dass die Ermittlung der absoluten Winkellage verzögert erfolgt, da zur Feststellung der Absolutwinkellage ausschließlich die Unregelmäßig ausgebildete Stelle dient. Bei einem einzigen unregelmäßigen Element kann demnach zunächst eine vollständige Umdrehung der zu vermessenden rotierenden Einrichtung erforderlich sein, bevor, nach Detektion des unregelmäßigen Elementes, die Winkellage bestimmt werden kann.

Darstellung der Erfindung

Der Erfindung liegt die Aufgabe zugrunde, eine Winkelmesseinrichtung bereitzustellen, die eine schnellere Bestimmung der Absolutwinkellage ermöglicht.

Diese Aufgabe wird mit den Merkmalen von Anspruch 1 gelöst. Auf vorteilhafte Ausgestaltungen nehmen die Unteransprüche Bezug.

Zur Lösung der Aufgabe sind den signalgebenden Elementen Signale zugeordnet, die in Form einer Pseudo-Random-Binär-Zeichenfolge angeordnet sind.

Eine Pseudo-Random-Binär-Zeichenfolge, abgekürzt PRBS, ist eine Folge von binären Zahlen, die durch die signalgebenden Elemente erzeugt werden. Die Signalfolge weist eine endliche Wiederholdauer auf, das bedeutet, dass sich die Signalfolge nach jeder Umdrehung des Messwertgebers wiederholt. Jede Signalfolge, die zu einem Muster zusammengefasst sind, kommt auf dem Messwertgeber nur einmal vor. Die binären Zahlen sind dabei als Zahlenstrang hintereinander angeordnet, der aus einer Anzahl n von n-tupeln besteht, wobei die n-tupel einander abfolgen und wobei jedes n-tupel nur einmal im Zahlenstrang vorhanden ist. Innerhalb des Zahlenstrangs kann eine beliebige Stelle angewählt werden und nach Abzählen von n+x weiteren Zahlen in einer Richtung ist eindeutig festlegbar, in welchem n-tupel und welcher Koordinate des n-tupels der Abzählvorgang seinen Anfang genommen hat; x ist dabei so zu wählen, dass das nachfolgende tupel vollständig durchschritten ist und das vorhergehende tupel, aus dem heraus der Abzählvorgang gestartet ist, ebenfalls durchlaufen ist. Der Unterschied zu einer Zufallsfolge liegt darin, dass nach jedem Muster die folgenden Muster bekannt und vorhersagbar sind. Daher kann jedem Muster eindeutig eine Winkellage zugeordnet werden. Der Mindestwinkel und damit der Mindestweg den der Messwertgeber zurück zu legen hat, um die Winkellage des Messwertgebers bestimmen zu können, ergibt sich durch die Anzahl der auf dem Messwertgeber angeordneten signalgebenden Elemente. Die erforderliche Anzahl von hintereinander angeordneten Signalen, beziehungsweise signalgebenden Elementen, die erforderlich ist, um die Absolut-Winkellage des Messwertgebers bestimmen zu können, kann nach folgender Gleichung bestimmt werden:

$$2^m \geq n$$

Dabei ist m die erforderliche Anzahl von hintereinander liegenden signalgebenden Elementen und n die Gesamtzahl von signalgebenden Elementen die auf dem Messwertgeber in einer Spur umfänglich angeordnet sind. Bei einer Gesamtzahl von 60 Elementen ergibt sich eine Mindestzahl von 6 Elementen die detektiert werden müssen, um die Winkellage bestimmen zu können. Werden die 60 Elemente in Form einer PRBS-Folge auf dem Messwertgeber angeordnet, so ist jede Folge von 6 Signalen nur einmal auf dem Messwertgeber vorhanden. Demnach kann mit dem Detektieren des 6. signalgebenden Elemtentes eindeutig auf die Winkellage geschlossen werden. Unter Einbeziehung eines maximalen Leerweges zwischen zwei signalgebenden Elementen von 6 ° kann nach maximal 7 mal 6°, also 42°, eindeutig die Absolut-Winkellage des Messwertgebers bestimmt werden.

Der Sensor kann ein binäres Ausgangssignal erzeugen. Binäre Signale können besonders einfach in Auswertelogiken weiterverarbeitet werden. Dieses binäre Signal kann bereits durch den Sensor bereitgestellt werden, der in einer eigenen Auswerteeinheit jedem Messwert einen binären Wert zuordnet. In einer anderen Ausführung werden die binären Ausgangssignale in der Auswerteeinheit erzeugt.

Jedes Encodersignal kann aus zwei unterschiedlichen Pegeln mit jeweils unterschiedlicher Länge zusammengesetzt sein. Nach dieser Ausgestaltung weisen alle Elemente die gleiche Gesamtlänge auf, wodurch mit einfachen Mitteln eine Bestimmung der Winkelgeschwindigkeit erfolgen kann. Die Unterscheidung der beiden verschiedenen Encodersignale erfolgt durch Bestimmung der unterschiedlichen Längenverhältnisse der jeweiligen Pegel, wobei die Pegel Abschnitte der einzelnen signalgebenden Elemente bilden.

Das Längenverhältnis der Pegel eines Signals kann 70:30 betragen. Zur Unterscheidung der verschiedenen Encodersignale, beziehungsweise der signalgebenden Elemente, weist dabei beispielsweise eine erste Gruppe signalgebender Elemente ein Längenverhältnis von 60:40 und eine zweite Gruppe signalgebender Elemente ein Längenverhältnis von 40:60 auf. Bei einem Verhältnis nahe 50:50 sinkt, insbesondere bei Elemente mit elektromagnetischem Wirkprinzip, ein störender Einfluss aufgrund der Asymmetrie der Pole. Bei einem Verhältnis im Bereich von 70:30 sinkt der Einfluss von Drehungleichförmigkeiten auf das Messergebnis, da die einzelnen Signale deutlicher voneinander zu unterscheiden sind. In der Praxis sind allerdings Längenverhältnisse von 55:45 bis 95:5 möglich.

Der Messwertgeber kann elektromagnetische Encodersignale erzeugen. Dabei wird nach passiven und aktiven Messwertgebern unterschieden. Bei passiven Messwertgebern sind die signalgebenden Elemente beispielsweise durch ein Zahnrad aus einem magnetisch leitfähigen Werkstoff gebildet. Diese Messwertgeber sind einfach und kostengünstig herstellbar. Aktive Messwertgeber sind durch magnetisierte signalgebende Elemente gebildet. Die Signale der aktiven Elemente sind besonders einfach durch Sensoren detektierbar. Magnetische Encodersignale sind einfach auswertbar. Jedes signalgebende Element weist in dieser Ausführung einen Nord- und einen Südpol auf, wobei beispielsweise ein signalgebendes Element über 70% der Länge einen Nordpol aufweist und über 30% der Länge einen Südpol aufweist. Nord- und Südpol erzeugen in dem Sensor einen unterschiedlichen Pegel. Bei dem genannten Verhältnis wird beispielsweise ein Signal in Form einer binären 1 erzeugt. Bei einem umgekehrten Längenverhältnis ergibt sich entsprechend ein Signal in Form einer binären 0.

Der Messwertgeber kann optische Encodersignale erzeugen. Optische Signale sind unempfindlich gegenüber elektromagnetischen Störeinflüssen angrenzender Einrichtungen. Optische Signale können beispielsweise durch Lochscheiben erzeugt werden. Dabei ergeben sich die Pegel beispielsweise durch Anordnen unterschiedlich langer Abschnitte von Löchern und Flächen oder unterschiedlich lange Schwarz/Weiße Abschnitte. Die Anordnung der signalgebenden Elemente erfolgt analog der elektromagnetischen Ausführung.

Die Winkelmesseinrichtung kann zumindest zwei Sensoren aufweisen. Dabei kann ein Sensor, der in nahe dem ersten Sensor angeordnet ist, zur Bestimmung der Drehrichtung vorgesehen sein. Bei Anordnung mehrerer Sensoren verringert sich der zur Bestimmung des Absolutwinkels des Messwertgebers notwendige Weg oder Winkel. Der Abstand der Sensoren wird dabei gemäß der folgenden Gleichung bestimmt:

$$A \approx \frac{m}{k} \cdot d$$

Dabei ist A der Abstand der Sensoren voneinander gemessen in Grad, m entspricht der erforderlichen Anzahl von Signalen, beziehungsweise signalgebenden Elementen hintereinander, die zur Bestimmung der Absolut-Winkellage erforderlich sind, k entspricht der Anzahl der Sensoren und d entspricht der Breite eines signalgebenden Elementes in Grad. Dementsprechend beträgt bei zwei Sensoren deren Abstand voneinander 18°. Der notwendige Weg, gemessen in Grad, zur Bestimmung des Absolutwinkels kann mit folgender Gleichung bestimmt werden:

$$W = \frac{m}{k} \cdot d + d$$

für k < m

$$W = \frac{m}{k} \cdot d$$

für k = m

Die Vorschriften gelten, wenn m durch k ganzzahlig teilbar ist. Demnach kann die Bestimmung des Absolutwinkels bei zwei Sensoren bereits nach 24° erfolgen. Durch zusätzliche Sensoren kann der notwendige Weg weiter verringert werden. Durch einen weiteren Sensor kann darüber hinaus auch eine Drehrichtungserkennung realisiert werden, so dass die Winkelmessung drehrichtungsunabhängig ist.

In einer weiteren Lösung der Aufgabe umfasst eine Anordnung zur Bestimmung der Winkellage eine rotierende Einrichtung, eine Winkelmesseinrichtung und eine Auswerteeinheit, wobei in der Auswerteeinheit eine Tabelle gespeichert ist, wobei in der Tabelle jeder Signalfolge von m Signalen, beziehungsweise, signalgebenden Elementen eine Winkellage der rotierenden Einrichtung zugeordnet ist. Die Feststellung der Absolut-Winkellage des Messwertgebers erfolgt durch Zuordnung der Signalfolge von m detektierten Signalen mit dem entsprechenden Tabellenwert, wobei der Tabelle wiederum die Winkellage entnehmbar ist. Dazu ist zunächst notwendig, dass, wie oben beschrieben, die notwendige Anzahl von Elementen detektiert wurde, so dass die Zuordnung der Elemente eindeutig ist. Tabellen können einfach und eindeutig ausgewertet werden.

In einem erfindungsgemäßen Verfahren zur Winkelmessung mit einer Winkelmesseinrichtung wird durch zumindest einen Sensor ein Messwertgeber abgetastet, die signalgebende Elemente detektiert und das durch die signalgebenden Elemente generierte Signal in ein binäres Signal umgewandelt, wobei Abfolgen von binären Signalen mit fest gespeicherten Referenzfolgen verglichen werden, wobei jeder Referenzfolge eine Winkellage eindeutig zugeordnet ist

Kurzbeschreibung der Zeichnung

Einige Ausführungsbeispiele der erfindungsgemäßen Winkelmesseinrichtung und der Anordnung werden nachfolgend anhand der Figuren näher erläutert. Diese zeigen, jeweils schematisch:

> Fig. 1 eine Anordnung zur Bestimmung der Winkellage;
> Fig. 2 eine Anordnung zur Bestimmung der Winkellage mit zwei Sensoren;
> Fig. 3 eine Signalfolge;
> Fig. 4 eine PRBS-Codierung;
> Fig. 5 Tabellen in der den Signalen Winkellagen zugeordnet sind.

Ausführung der Erfindung

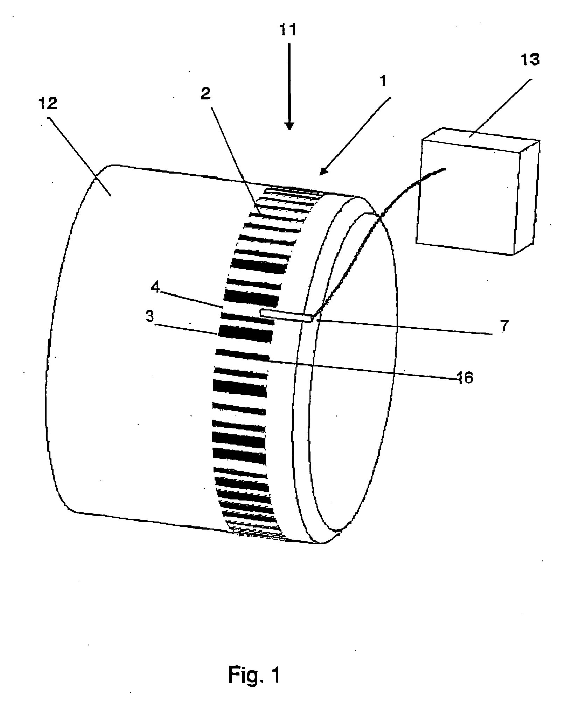

Figur 1 zeigt eine Anordnung 11 zur Bestimmung der Winkellage einer rotierenden Einrichtung 12, bestehend aus einer Winkelmesseinrichtung 1 und einer Auswerteeinheit 13. Dabei besteht die Winkelmesseinrichtung 1 aus einem einen Messwertgeber 2 auf dem in einer Spur 16 und umfänglich eine Anzahl signalgebenden Elementen 3, 4 angeordnet sind. Die signalgebenden Elemente 3, 4 sind in dieser Ausführung aus einem thermoplastischen, mit magnetisiertem Ferrit durchsetztem Material gebildet, wobei jedes signalgebende Element 3, 4 einen magnetischen Nord- und einen magnetischen Südpol aufweist. Dadurch erzeugt jedes signalgebende Element 3, 4 Encodersignale 16, 17 mit jeweils zwei Pegeln 5, 6. In anderen Ausgestaltungen können die signalgebenden Elemente 3, 4 auch aus einer Lochscheibe gebildet sein oder ein Schwarz/Weiß Muster aufweisen und dadurch optische Encodersignale 16, 17 erzeugen. Dabei sind zwei verschiedene signalgebenden Elemente 3, 4 auf dem Messwertgeber 2 angeordnet, die voneinander abweichende Encodersignale 16, 17 erzeugen. Die Encodersignale 16, 17 werden durch einen Sensor 7 detektiert. Die Pegel 5, 6 der Encodersignale 16, 17 werden in einer Auswerteeinheit 13 in binäre Signale 8, 9 umgewandelt, die in Signalfolgen 10 hintereinander angeordnet sind. Aus den Pegeln 5, 6 der Encodersignale 16, 17 resultieren voneinander abweichende Signale 8, 9. Damit ist jedem Encodersignal 16, 17 eindeutig ein Signal 8, 9 zugeordnet. Die Abfolge der signalgebenden Elemente 3, 4 auf der Spur 16 und damit der Signale 8, 9 entspricht einer Pseudo-Random-Binär-Zeichenfolge (PRBS). Der Wert einer Signalfolge 10 wird in der Auswerteeinheit 13 mit einem in einer Tabelle 14 gespeicherten Referenzwert verglichen, wobei in der Tabelle 14 jeder Signalfolge 10 eine Winkellage der rotierenden Einrichtung 12 zugeordnet ist.

Zur Bestimmung der Absolut-Winkellage einer rotierenden Einrichtung 12 mit einer Winkelmesseinrichtung 1 wird durch den Sensor 7 ein Messwertgeber 2 abgetastet, wobei die durch die signalgebenden Elemente 3, 4 erzeugten Pegel 5, 6 der Encodersignale 16, 17 detektiert werden. Die durch die signalgebenden Elemente 3, 4 generierten Pegel 5, 6 werden in der Auswerteeinheit 13 in ein binäre Signale 8, 9 umgewandelt. In der Auswerteeinheit 13 werden binäre Signalfolgen 10 mit fest gespeicherten Referenzfolgen 15 verglichen, wobei jeder Signalfolge 10 mit m Signalen 8, 9 eine Winkellage eindeutig zugeordnet ist. Bei 60 signalgebenden Elementen 3, 4, welche Signale 8, 9 in einer PRBS-Folge erzeugen und die auf dem Messwertgeber 2 angeordnet sind, kann jede Folge von sechs Signalen 8, 9 nur einmal durch den Messwertgeber 2 erzeugt werden. Dabei bilden sechs hintereinander angeordnete Signale 8, 9 eine Signalfolge 10. Mit dem Detektieren des 6. Signals 8, 9 einer Signalfolge 10 kann eindeutig auf die Winkellage geschlossen werden. Unter Einbeziehung eines maximalen Leerweges zwischen zwei Signalfolgen 10 von 6 ° kann nach maximal 7 mal 6°, also 42°, eindeutig die Absolut-Winkellage des Messwertgebers 2 bestimmt werden.

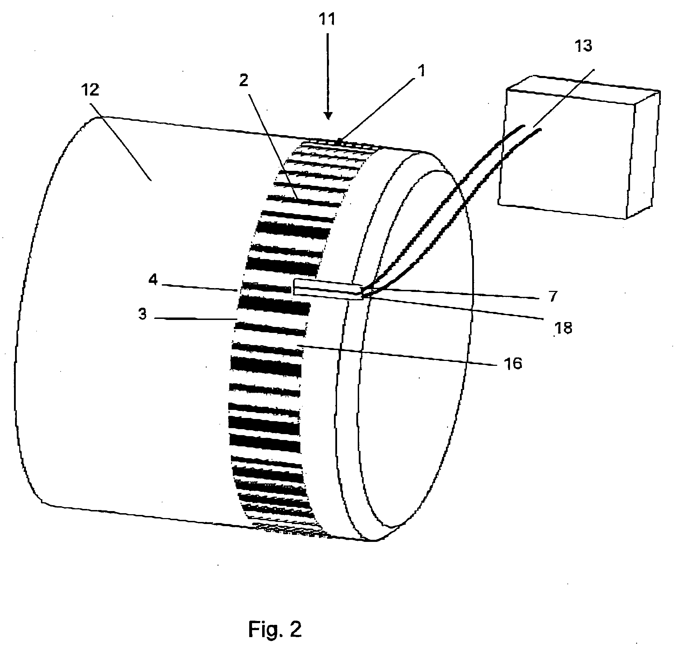

Figur 2 zeigt eine Anordnung 11 gemäß Figur 1, die in dieser Ausführung zwei Sensoren 7, 18 aufweist. Der zweite Sensor 18 ermöglicht eine Drehrichtungserkennung der rotierenden Einrichtung 12. Dazu sind die Sensoren 7, 18 benachbart angeordnet und die Drehrichtungserkennung erfolgt durch Auswerten des Pegels 5, 6 an einem Sensor 7 bei Wechsel des Pegels 5, 6 am anderen Sensor 18.

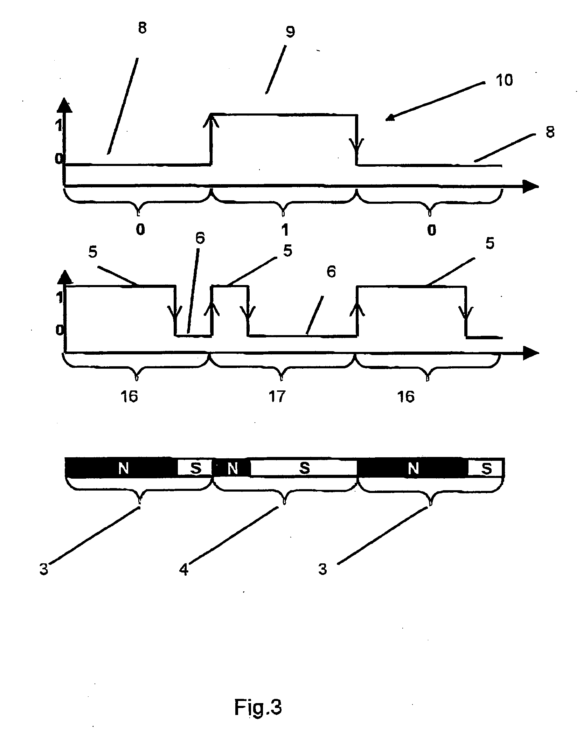

Figur 3 zeigt einen Ausschnitt des Messwertgebers 2 mit drei signalgebenden Elementen 3, 4. Die signalgebenden Elemente 3, 4 erzeugen jeweils Encodersignale 16, 17 mit unterschiedlichen Pegeln 5, 6. In dieser Ausführung erfolgt das durch Anordnen jeweils eines magnetischen Nordpols und eines magnetischen Südpols in jedem signalgebenden Element 3, 4. Die Pole jedes Elementes 3, 4 weisen dabei eine unterschiedliche Länge auf. In dieser Ausführung beträgt das Längenverhältnis Nordpol zu Südpol bei einem Teil der Elemente 3 70:30 und bei einem anderen Teil der Elemente 4 30:70. Jedes Element 3, 4 erzeugt dabei ein Encodersignal 16, 17 mit zwei Pegeln 5, 6, die jeweils unterschiedliche Längen aufweisen. Aus den unterschiedlichen Pegeln 5, 6 werden im Sensor 7 oder in der Auswerteeinheit 13 binäre Signale 8, 9 erzeugt, die den Elemente 3, 4 zugeordnet werden können. Die Signale 8, 9 sind zu Signalfolgen 10 hintereinander angeordnet und werden in der Auswerteeinheit 13 ausgewertet.

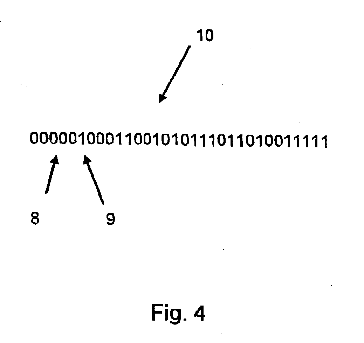

Figur 4 zeigt hintereinander angeordnete Signalfolgen 10, wobei jedes Signal 8, 9 einem signalgebenden Element 3, 4 zugeordnet ist. Die Signale 8, 9 sind in Form einer PRBS-Folge angeordnet. Die Gesamtlänge umfasst in dieser Ausführung 32 Signale, wobei aufgrund der Gesamtlänge nach fünf einzelnen Signalen 8, 9 die Position eindeutig bestimmbar ist, da eine Signalfolge 10 von fünf Signalen 8, 9 nur einmal auf der Gesamtlänge vorkommt.

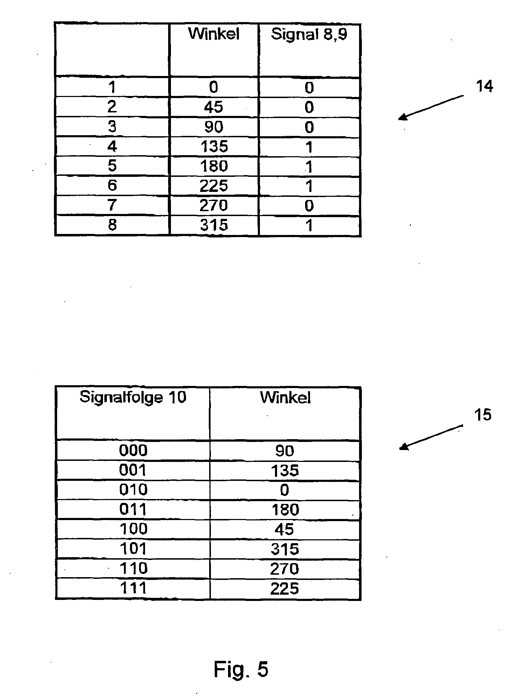

Figur 5 zeigt zwei Tabellen 14, 15 in der den Signalen 8, 9 und den daraus resultierenden Signalfolgen 10 jeweils eine Winkellage eindeutig zugeordnet ist. Tabelle 14 zeigt dabei eine Zuordnung von Winkel und einzelnem Signal 8, 9. Tabelle 15 zeigt die eindeutige Zuordnung einer Signalfolge 10 bestehend aus einer Folge von drei Signalen 8, 9 und der zugeordneten Winkellage der rotierenden Einrichtung. Tabelle 15 kann als Referenztabelle in einer Auswerteeinheit 13 gespeichert sein.

## Patentansprüche

1. Winkelmesseinrichtung (1), umfassend zumindest einen Messwertgeber (2), jeweils eine Anzahl von zwei unterschiedlichen signalgebenden Elementen (3, 4), die voneinander abweichende Encodersignale (16, 17) erzeugen, welche durch zumindest einen Sensor (7) detektierbar sind, **dadurch gekennzeichnet, dass** den signalgebenden Elementen (3, 4) Signale (8, 9) zugeordnet sind, die in Form einer PRBS angeordnet sind.

2. Winkelmesseinrichtung nach Anspruch 1, **dadurch gekennzeichnet, dass** der Sensor (7) ein binäres Ausgangssignal (10) erzeugt.

3. Winkelmesseinrichtung nach Anspruch 1 oder 2, **dadurch gekennzeichnet, dass** jedes Encodersignal (16, 17) aus zwei unterschiedlichen Pegeln (5, 6) mit jeweils unterschiedlicher Länge zusammengesetzt ist.

4. Winkelmesseinrichtung nach Anspruch 3, **dadurch gekennzeichnet, dass** das Längenverhältnis der Pegel (5, 6) eines Encodersignals (16, 17) 70:30 beträgt.

5. Winkelmesseinrichtung nach einem der Ansprüche 1 bis 4, **dadurch gekennzeichnet, dass** der Messwertgeber (2) elektromagnetische Encodersignale (16, 17) erzeugt.

6. Winkelmesseinrichtung nach einem der Ansprüche 1 bis 4, **dadurch gekennzeichnet, dass** der Messwertgeber (2) optische Encodersignale (16, 17) erzeugt.

7. Winkelmesseinrichtung nach einem der Ansprüche 1 bis 6, **dadurch gekennzeichnet, dass** die Winkelmesseinrichtung (1) zumindest zwei Sensoren (7, 18) aufweist.

8. Anordnung (11) zur Bestimmung der Winkellage einer rotierenden Einrichtung (12), umfassend eine Winkelmesseinrichtung (1) und eine Auswerteeinheit (13), **dadurch gekennzeichnet, dass** in der Auswerteeinheit (13) eine Tabelle (14) gespeichert ist, wobei in der Tabelle (14) jeder Signalfolge (10) eine Winkellage der rotierenden Einrichtung (12) zugeordnet ist.

9. Verfahren zur Winkelmessung mit einer Winkelmesseinrichtung (1) gemäß einem der vorherigen Ansprüche bei dem durch zumindest einen Sensor (7) ein Messwertgeber (2) abgetastet wird und durch signalgebende Elemente (3, 4) erzeugte Pegel (5, 6) detektiert werden, wobei ein Pegelpaar (5, 6) einem Encodersignal (16, 17) entspricht, und die detektierten Pegel (5, 6) in binäre Signale (8, 9) umgewandelt werden, wobei die Signale (8, 9) in Signalfolgen (10) hintereinander angeordnet sind und Signalfolgen (10) mit fest gespeicherten Referenzfolgen (15) verglichen werden, wobei jeder Signalfolge (10) eine Winkellage eindeutig zugeordnet ist.

## Geänderte Patentansprüche gemäss Regel 86(2) EPÜ.

1. Winkelmesseinrichtung (1), umfassend zumindest einen Messwertgeber (2), jeweils eine Anzahl von zwei unterschiedlichen signalgebenden Elementen (3, 4), die voneinander abweichende magnetische Encodersignale (16, 17) erzeugen, welche durch zumindest einen Sensor (7) detektierbar sind, wobei den signalgebenden Elementen (3, 4) Signale (8, 9) zugeordnet sind, die in Form einer Pseudo-Random-Binär Zeichenfolge angeordnet sind, **dadurch gekennzeichnet, dass** höchstens zwei Sensoren (7) vorgesehen sind.

2. Winkelmesseinrichtung nach Anspruch 1, **dadurch gekennzeichnet, dass** der Sensor (7) ein binäres Ausgangssignal (10) erzeugt.

3. Winkelmesseinrichtung nach Anspruch 1 oder 2, **dadurch gekennzeichnet, dass** jedes Encodersignal (16, 17) aus zwei unterschiedlichen Pegeln (5, 6) mit jeweils unterschiedlicher Länge zusammengesetzt ist.

4. Winkelmesseinrichtung nach Anspruch 3, **dadurch gekennzeichnet, dass** das Längenverhältnis der Pegel (5, 6) eines Encodersignals (16, 17) 70:30 beträgt.

**5.** Verfahren zur Winkelmessung mit einer Winkelmesseinrichtung (1) gemäß einem der vorherigen Ansprüche bei dem durch höchstens zwei Sensoren (7) ein Messwertgeber (2) abgetastet wird und durch signalgebende Elemente (3, 4) erzeugte Pegel (5, 6) detektiert werden, wobei ein Pegel paar (5, 6) einem Encodersignal (16,17) entspricht, und die detektierten Pegel (5, 6) in binäre Signale (8, 9) umgewandelt werden, wobei die Signale (8, 9) in Signalfolgen (10) hintereinander angeordnet sind und Signalfolgen (10) mit fest gespeicherten Referenzfolgen (15) verglichen werden, wobei jeder Signalfolge (10) eine Winkellage eindeutig zugeordnet ist.

Fig. 1

Fig. 2

Fig.3

10

00000100011001010111011010011111

8        9

Fig. 4

| | Winkel | Signal 8,9 |
|---|---|---|
| 1 | 0 | 0 |
| 2 | 45 | 0 |
| 3 | 90 | 0 |
| 4 | 135 | 1 |
| 5 | 180 | 1 |
| 6 | 225 | 1 |
| 7 | 270 | 0 |
| 8 | 315 | 1 |

14

| Signalfolge 10 | Winkel |
|---|---|
| 000 | 90 |
| 001 | 135 |
| 010 | 0 |
| 011 | 180 |
| 100 | 45 |
| 101 | 315 |
| 110 | 270 |
| 111 | 225 |

15

## Fig. 5

# EP 1 783 462 A1

**Europäisches Patentamt**

## EUROPÄISCHER RECHERCHENBERICHT

Nummer der Anmeldung

EP 05 02 4288

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 101 04 855 A1 (TEMIC TELEFUNKEN MICROELECTRONIC GMBH) 29. Mai 2002 (2002-05-29) * das ganze Dokument * ----- | 1-9 | INV. G01D5/249 |
| X | EP 0 378 351 A (SCHLUMBERGER INDUSTRIES LIMITED) 18. Juli 1990 (1990-07-18) * Spalte 1, Zeile 44 - Spalte 2, Zeile 45 * * Spalte 8, Zeile 3 - Zeile 32 * * Spalte 10, Zeile 16 - Zeile 24 * * Spalte 12, Zeile 40 - Zeile 46; Abbildung 6 * ----- | 1-4,6-9 | |
| X | GB 2 126 444 A (* ROSEMOUNT ENGINEERING COMPANY LIMITED) 21. März 1984 (1984-03-21) * Seite 5, Zeile 11 - Zeile 63 * * Seite 6, Zeile 42 - Zeile 80 * * Seite 8, Zeile 51 - Zeile 80; Abbildungen 2,6,7 * ----- | 1,2,5-9 | |
| X | EP 1 387 147 A (RODI, ANTON) 4. Februar 2004 (2004-02-04) * das ganze Dokument * ----- | 1,2,5-7 | RECHERCHIERTE SACHGEBIETE (IPC) G01D |
| X | US 2004/015323 A1 (BOYTON DESMOND BRUCE) 22. Januar 2004 (2004-01-22) * Zusammenfassung; Abbildungen * ----- | 1,2,5-9 | |

Der vorliegende Recherchenbericht wurde für alle Patentansprüche erstellt

| Recherchenort | Abschlußdatum der Recherche | Prüfer |
|---|---|---|
| Den Haag | 19. April 2006 | Keita, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

12

**ANHANG ZUM EUROPÄISCHEN RECHERCHENBERICHT**
**ÜBER DIE EUROPÄISCHE PATENTANMELDUNG NR.**

EP 05 02 4288

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-04-2006

| Im Recherchenbericht angeführtes Patentdokument | | Datum der Veröffentlichung | Mitglied(er) der Patentfamilie | | Datum der Veröffentlichung |
|---|---|---|---|---|---|
| DE 10104855 | A1 | 29-05-2002 | KEINE | | |
| EP 0378351 | A | 18-07-1990 | CA | 2007221 A1 | 09-07-1990 |
| | | | GB | 2228842 A | 05-09-1990 |
| | | | JP | 2245615 A | 01-10-1990 |
| | | | US | 5171983 A | 15-12-1992 |
| GB 2126444 | A | 21-03-1984 | KEINE | | |
| EP 1387147 | A | 04-02-2004 | KEINE | | |
| US 2004015323 | A1 | 22-01-2004 | WO | 0201160 A1 | 03-01-2002 |
| | | | CA | 2427788 A1 | 03-01-2002 |
| | | | EP | 1409964 A1 | 21-04-2004 |

EPO FORM P0461

Für nähere Einzelheiten zu diesem Anhang : siehe Amtsblatt des Europäischen Patentamts, Nr.12/82